# EUROPÄISCHE PATENTSCHRIFT

(11) **EP 1 054 751 B1**
(45) Veröffentlichungstag und Bekanntmachung des Hinweises auf die Patenterteilung: **17.07.2002**
(21) Anmeldenummer: 99908767.9
(22) Anmeldetag: 04.02.1999
(51) Int. Cl.: B23Q 7/10

(54) **HANDHABUNGSVORRICHTUNG ZUR ZUFÜHRUNG UND/ODER ABFÜHRUNG VON WERKSTÜCKEN**
HANDLING DEVICE FOR FEEDING AND/OR REMOVING WORKPIECES
DISPOSITIF DE MANUTENTION POUR ACHEMINER ET/OU EVACUER DES PIECES

(30) Priorität: 10.02.1998 DE 19805206
(43) Veröffentlichungstag der Anmeldung: 29.11.2000
(73) Patentinhaber: Artur Bär GmbH, 75050 Gemmingen (DE)
(72) Erfinder: BÄR, Ralf, D-75050 Gemmingen (DE); DEPONTE, Georg, D-74193 Schwaigern (DE)
(74) Vertreter: Clemens, Gerhard, Dr.-Ing.
(86) Internationale Anmeldenummer: DE9900293
(87) Internationale Veröffentlichungsnummer: WO9941037

(56) Entgegenhaltungen:
- EP-A- 0 673 711
- DE-A- 2 535 680
- DE-A- 3 151 316
- DE-A- 3 910 705
- GB-A- 1 547 470

## Beschreibung

### TECHNISCHES GEBIET

Die Erfindung betrifft eine Handhabungsvorrichtung zur Zuführung und/oder Abführung von Werkstücken als Rohteile zu einer Bearbeitungs- oder Montageeinrichtung zu Bearbeitungs- und/oder Montagezwecken und zur Aufnahme von Werkstücken nach Bearbeitung und/oder Montage als Fertigteile, mit Werkstückträgern, auf welchen die Werkstücke angeordnet sind, Werkstückträgerstapeleinheiten, die übereinander angeordnete Werkstückträger aufweisen, einer Werkstückhandhabungseinheit, die die Werkstücke von dem jeweiligen Werkstückträger entnimmt und der Bearbeitungs- und/oder Montageeinrichtung zuführt und nach Bearbeitung/Montage auf dem Werkstückträger wieder ablegt, einer Werkstückträgerhandhabungseinheit, die die jeweiligen Werkstückträger mit unbearbeiteten Werkstücken einer Werkstückträgerstapeleinheit der Werkstückhandhabungseinheit von einer Aufnahmeposition aus in eine Bereitstellungsposition zuführt und diesen Werkstückträger nach Bearbeitung seiner Werkstücke von der Bereitstellungsposition auf eine Ablageposition einer weiteren Werkstückträgerstapeleinheit ablegt, einer Stapeltransporteinheit, die die Werkstückträgerstapeleinheiten innerhalb der Vorrichtung in Transportrichtung transportiert, und zwar von einer Zufuhrposition, der die Werkstückträgerstapeleinheiten mit den unbearbeiteten Werkstücken von außen zugeführt werden, bis zu einer Entnahmeposition von der die Werkstückträgerstapeleinheiten mit den bearbeiteten Werkstücken nach außen entnommen werden, einer Steuereinrichtung, die so ausgebildet ist, dass sie die Komponenten derart ansteuert, dass die Werkstückträgerhandhabungseinheit die Werkstückträger mit zu bearbeitenden Werkstücken in einer Aufnahmeposition entnimmt und in einer Ablageposition die Werkstückträger nach Bearbeitung ihrer Werkstücke ablegt, d.h. die Aufnahmeposition insbesondere benachbart zur Ablageposition ausgebildet ist, wobei zwischen Zufuhrposition und Entnahmeposition zumindest eine weitere Zwischenposition für jeweils eine Werkstückträgerstapeleinheit vorhanden ist, die Stapeltransporteinheit so ausgebildet ist, dass sie zumindest zwei vor der Entnahmeposition angeordnete Werkstückträgerstapeleinheiten um eine Position in Transportrichtung zur Entnahmeposition hin verschieben kann.

Die Erfindung betrifft weiterhin ein Verfahren zum Betreiben der eingangs genannten Handhabungsvorrichtung.

### STAND DER TECHNIK

Handhabungsvorrichtungen der eingangs genannten Art sind bekannt und werden zur Beschickung von Bearbeitungs-/Montagemaschinen und dergleichen verwendet. Dabei werden die Werkstücke auf Werkstückträgern gelagert, palettenweise zugeführt, bearbeitet und palettenweise wieder entnommen. Hierbei wird meist eine Palettenumsetzvorrichtung mit zwei gesteuerten Achsen in Horizontalrichtung und in Vertikalrichtung eingesetzt, der außerhalb des Arbeitsraums über ein Band Werkstückträger mit unbearbeiteten Werkstücken zugeführt werden können, wobei aus dem Arbeitsraum Werkstückträger mit bearbeiteten Werkstücken über ein weiteres Band ausgeschleust werden können. Die Werkstückträger werden in der Regel an eine Handhabungseinheit übergeben, die die Palette an eine definierte Bearbeitungsposition überführt. Aus der Bearbeitungsposition werden beispielsweise mittels Greifern oder sonstige Handhabungseinheiten einzelne Werkstücke übernommen und der Bearbeitungseinrichtung zugeführt. Nach Bearbeitung erfolgt die Ablage der Werkstücke wiederum auf einer Palette. Diese Paletten werden wiederum zu einem Stapel angeordnet und stapelweise der Vorrichtung nach vollständiger Bearbeitung entnommen.

Derartige Vorrichtungen sind relativ aufwendig, da eine ständige Kontrolle des Handhabungssystems gewährleistet sein muss, was einem vollständigen Automatisierungsprozess entgegensteht.

Aus der EP-0 673 711 ist eine Handhabungssystem bekannt, bei dem ein Arbeitsraum vorhanden ist, der durch eine Schutzwand nach außen abgeschlossen ist und innerhalb dessen ein Palettenumsetzer zur Bereitstellung von Werkstückträgern mit unbearbeiteten Werkstücken und zur Aufnahme von Werkstückträgern nach Bearbeitung vorgesehen ist. Die Zuführung von Werkstückträgern in den Arbeitsraum geschieht durch einen Drehtisch mit einem H-förmigen Drehgestell, in das Werkstückträgerstapel auf Rollwagen eingefahren werden können. Der Drehtisch weist einen Schutzwandabschnitt auf, durch den der Arbeitsraum vollständig gegenüber einem Laderaum abgetrennt ist, so dass während der Bearbeitung der Werstückträger innerhalb des Arbeitsraums im Laderaum ohne Gefahr ein Wechsel der Werkstückträgerstapel durchgeführt werden kann. Zur Präsentation muss ein Umstapeln der Werkstückträgerstapel erfolgen, was letztendlich.ein Zeitverlust bedeutet.

Die DE 31 51 316 offenbart eine Handhabungsvorrichtung zur Zuführung und/oder Abführung von Werkstücken der eingangs genannten Art. Bei dieser Vorrichtung kommt es zwischen dem Wechsel der Werkstückträgerstapeleinheiten zu relativ großen Stillstandzeiten, was sich nachteilig auf den wirtschaftlichen Einsatz derartiger Handhabungsvorrichtungen auswirkt.

### DARSTELLUNG DER ERFINDUNG

Ausgehend von dem genannten Stand der Technik liegt der vorliegenden Erfindung die Aufgabe bzw. das technische Problem zugrunde, eine verbesserte Handhabungsvorrichtung zur Zuführung von Werkstücken anzugeben, die im Sinne eines wirtschaftlichen Einsatzes eine Steigerung der Automatisierung ermöglicht und die Stillstandzeit nach dem Abarbeiten des letzten Werkstückträgers minimiert.

Weiterhin soll ein verbessertes Verfahren zur Handhabung von Werkstücken angegeben werden, das einen wirtschaftlichen Einsatz gewährleistet und eine einfache konstruktive Umsetzung ermöglicht und die Stillstandzeit nach dem Abarbeiten des letzten Werkstückträgers minimiert.

Die erfindungsgemäße Vorrichtung zur Zuführung von Werkstücken zu einer Bearbeitungs- und/oder Montageeinrichtung ist durch die Merkmale der unabhängigen Ansprüche 1 und 2 gegeben. Vorteilhafte Ausgestaltungen und Weiterbildungen sind Gegenstand der abhängigen Ansprüche.

Die erfindungsgemäße Handhabungsvorrichtung zeichnet sich demgemäß dadurch aus, dass die Steuereinrichtung weiterhin so ausgebildet ist, dass sobald in der Entnahmeposition eine vollständig bearbeitete Werkstückträgerstapeleinheit vorhanden ist, die Aufnahme- und Ablageposition der Werkstückträgerhandhabungseinheit um eine Position entgegen der Transportrichtung verschoben wird, nach Entnahme der Werkstückträgerstapeleinheit aus der Entnahmeposition zumindest zwei der vor der Entnahmeposition befindlichen Werkstückträgerstapeleinheiten um eine Position in Transportrichtung mittels der Stapeltransporteinheit verschoben werden und gleichzeitig die Aufnahmeposition und Ablageposition der Werkstückträgerhandhabungseinheit ebenfalls um eine Position in Transportrichtung verschoben wird und dadurch in die Zuführposition eine Werkstückträgerstapeleinheit mit Werkstückträgern mit unbearbeiteten Werkstücken eingebracht werden kann. Durch die erfindungsgemäße Vorrichtung entfällt das im Stand der Technik vor Präsentation der Werkstücke für die Bearbeitungseinrichtung erforderliche Umstapeln der Werkstückträgerstapel, was die Stillstandszeiten der Bearbeitungsvorrichtung reduziert bzw. günstigen Einfluss auf die Taktzeitintervalle bei der Bearbeitung der Werkstücke mit sich bringt.

Eine bevorzugte Ausgestaltung der erfinderischen Vorrichtung zeichnet sich dadurch aus, dass zwischen der Zuführposition und der Entnahmeposition eine einzige Zwischenposition vorhanden ist.

Eine konstruktiv besonders einfach umzusetzende Vorrichtung zeichnet sich dadurch aus, dass die Werkstückträgerhandhabungseinheit um eine horizontale und vertikale Achse verschieblich vorhanden ist und die Transportrichtung der Stapeltransporteinheit im wesentlichen parallel zur horizontalen Achse der Werkstückträgerhandhabungseinheit angeordnet ist.

Eine hinsichtlich erhöhter Arbeitssicherheit besonders bevorzugte Ausgestaltung zeichnet sich dadurch aus, dass bewegbare Schutzwände vorhanden sind, die bei Zuführung von Werkstückträgerstapeleinheiten bzw.bei Entnahme von Werkstückträgerstapeleinheiten den benachbarten Positionsbereich, in dem eine Verarbeitung stattfindet, versperren.

Eine hinsichtlich einer einfachen konstruktiven Ausbildung der Stapeltransporteinheit besonders bevorzugte Ausgestaltung zeichnet sich dadurch aus, dass die Stapeltransporteinheit eine Linearführung besitzt und zwischen die jeweiligen Werkstückträgerstapeleinheiten einschwenkbare Vorsprungeinheiten besitzt, wobei sich eine besonders vorteilhafte Weiterbildung dadurch auszeichnet, dass die Stapeltransporteinheit eine Drehachseneinheit besitzt, auf der die mittels eines Aggregats längsverschieblich und mittels eines Aggregats drehbar angeordneten Vorsprungeinheiten vorhanden sind.

Eine weitere vorteilhafte Ausgestaltung der erfindungsgemäßen Handhabungsvorrichtung zeichnet sich dadurch aus, dass die Stapeltransporteinheit einen Kettenantrieb mit ansteuerbaren Aggregaten aufweist oder die Stapeltransporteinheit einen über Antriebsaggregate ansteuerbaren Schubstangenantrieb aufweist.

Eine besonders bevorzugte eigenständige Lösung ist durch die Merkmale des unabhängigen Anspruchs 2 gegeben und zeichnet sich dadurch aus, dass die Steuereinrichtung weiterhin so ausgebildet ist, dass sobald in der Entnahmeposition eine vollständig bearbeitete Werkstückträgerstapeleinheit vorhanden ist, die Aufnahme- und Ablageposition der Werkstückträgerhandhabungseinheit um eine Position entgegen der Transportrichtung verschoben wird, nach Entnahme der Werkstückträgerstapeleinheit aus der Entnahmeposition zumindest zwei der vor der Entnahmeposition befindlichen Werkstückträgerstapeleinheiten um eine Position in Transportrichtung mittels der Werkstückträgerhandhabungseinheit verschoben werden und gleichzeitig die Aufnahmeposition und Ablageposition der Werkstückträgerhandhabungseinheit ebenfalls um eine Position in Transportrichtung verschoben wird und dadurch in die Zuführposition eine Werkstückträgerstapeleinheit mit Werkstückträgern mit unbearbeiteten Werkstücken eingebracht werden kann.

Bei der Bearbeitung von Werkstücken mit entsprechend langen Bearbeitungszeiten, d.h. beim taktzeitunkritischen Verfahren kann somit die Aufgabe der Werkstückträgerhandhabungseinheit hinsichtlich des Transports die Aufgaben der Stapeltransporteinheit übernehmen, wodurch Letztere entfällt.

Das erfindungsgemäße Verfahren ist durch die Merkmale des Anspruchs 11 gegeben. Vorteilhafte Ausgestaltungen und Weiterbildungen des Verfahrens sind Gegenstand weiterer abhängiger Ansprüche.

Das Verfahren zur Handhabung von Werkstücken, die auf Werkstückträgern gelagert sind, welche Werkstückträger zu Werkstückträgerstapeleinheiten gestapelt sind, wobei die Werkstückträgerstapeleinheiten von außen einer Zuführposition zugeführt werden, mittels einer Stapeltransporteinheit oder einer Werkstückträgerhandhabungseinheit in Transportrichtung einer Entnahmeposition zugeführt werden, wobei die Werkstückträgerhandhabungseinheit die einzelnen Werkstückträger einer Bereitstellungsposition zuführt, auf die die Werkstückhandhabungseinheit zugreift mit folgenden Verfahrensschritten:
a) Zuführen einer Werkstückträgerstapeleinheit zu der Zuführposition von außen,
b) Transport der Werkstückträgerstapeleinheit in Transportrichtung in eine Zwischenposition,
c) gegebenenfalls Wiederholen der Schritte a) bis c) entsprechend der Anzahl der Zwischenpositionen,
d) Entnahme eines Werkstückträgers durch die Werkstückträgerhandhabungseinheit aus einer momentan als Aufnahmeposition definierten Zwischenposition zum Zuführen an eine Bearbeitungsposition,
e) Entnehmen der Werkstücke und Zuführen einer Bearbeitungs-/Montageeinrichtung durch die Werkstückhandhabungseinheit und Ablage des Werkstücks auf dem Werkstückträger nach Bearbeitung so lange, bis die Werkstücke des jeweiligen Werkstückträgers vollständig bearbeitet sind,
f) Entnahme des Werkstückträgers aus der Bearbeitungsposition durch die Werkstückträgerhandhabungseinheit und Ablage in der momentan als Ablageposition definierten Entnahmeposition,
g) Wiederholen der Schritte d) bis f) bis die Werkstückträgerstapeleinheit in momentaner Aufnahmeposition vollständig abgearbeitet ist,
k) Zuführung einer weiteren Werkstückträgerstapeleinheit in Zuführposition von außen,
l) Wiederholen der Verfahrensschritte d) bis j).

Das Verfahren ist dadurch gekennzeichnet, dass zwischen den Verfahrensschritten g) und k) folgende Verfahrensschritte hinzukommen:
h) Verschieben der momentanen Aufnahme- und Ablageposition entgegen Transportrichtung um zumindest eine Position und Entnahme der bearbeiteten Werkstückträ gerstapeleinheit (18) aus der Entnahmeposition,
j) Verschieben der vor der Entnahmeposition angeordneten Werkstückträgerstapeleinheiten um eine Position in Transportrichtung bei gleichzeitigen Verschieben der Aufnahme-/Ablageposition der Werkstückträgerhandhabungseinheit um eine Position in Transportrichtung.

Eine besonders bevorzugte Ausgestaltung des erfindungsgemäßen Verfahrens zeichnet sich dadurch aus, dass die Aufnahmeposition und die Ablageposition für die Stapeleinheit benachbart ausgebildet ist, wobei bevorzugt das Versetzen der Aufnahme-/Ablageposition für die Werkstückträgerhandhabungseinheit bevorzugt eine Positionseinheit entgegen bzw. in Transportrichtung beträgt.

Zu einer besonders kompakten Anlage gelangt man, wenn erfindungsgemäß eine Zuführposition, eine Zwischenposition und eine Entnahmeposition angeordnet ist, wobei diese Positionen parallel zur horizontalen Verschiebeachse der Werkstückträgerhandhabungseinheit in vorteilhafter Art und Weise angeordnet sind.

Eine besonders bevorzugte Ausgestaltung des erfindungsgemäßen Verfahrens zeichnet sich dadurch aus, dass die vor der Entnahmeposition befindlichen Werkstückträgerstapeleinheiten durch die Stapeltransporteinheit oder Werkstückträgerhandhabungseinheit in einer Transportrichtung (T) verschoben werden, die parallel zu der horizontalen Achse (H) der Werkstückträgerhandhabungseinheit verläuft.

Es gibt Situationen, in denen die Werkstückhandhabungseinheit die Bearbeitungseinrichtung zunächst mit einer vorgegebenen Anzahl von Werkstücken bestücken muss, damit diese ihre Bearbeitung aufnimmt. Dieser Konstellation Rechnung tragend, zeichnet sich eine bevorzugte Ausgestaltung des erfindungsgemäßen Verfahrens dadurch aus, dass die Werkstückhandhabungseinheit einen Satz von Werkstücken einer Werkstückträgereinheit einzeln oder gemeinsam der Bearbeitungseinrichtung zuführt, die dann geleerte Werkstückträgereinheit einer Lagerzwischenposition zugeführt wird, nach Abarbeitung sämtlicher zu bearbeitender Werkstückträger/stapeleinheiten die in der Bearbeitungsvorrichtung noch vorhandenen Werkstücke der leeren Werkstückträgereinheit zugeführt werden. Diese Möglichkeit ist bei den bekannten Verfahren nicht möglich, da bei diesem Verfahren zwangsläufig eine Umstapelung der in den Arbeitsraum eingebrachten Werkstückträgerstapel erfolgen muss. Das erfindungsgemäße Verfahren gewährleistet mit diesem Merkmal eine chargentreue Bearbeitung der jeweiligen Werkstückträger.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Verfahrensablauf der Umstapelung der einzelnen Werkstückträger zu Werkstückträgerstapeleinheiten während des Verfahrensablaufs,
- Fig. 2: schematische Perspektivdarstellung einer Handhabungsvorrichtung mit nachgeordneter Bearbeitungseinrichtung, jedoch ohne Darstellung vorhandener Schutzwände und Schutztüren,
- Fig. 3: schematische Detailperspektivdarstellung der Vorrichtung gem. Fig. 2 im Stapelzuführungs- und -entnahmebereich und
- Fig. 4: schematische Perspektivdarstellung der schrittweisen Beschickung der Handhabungsvorrichtung mit Werkstückträgerstapeleinheiten zu Verfahrensbeginn.

### WEGE ZUM AUSFÜHREN DER ERFINDUNG

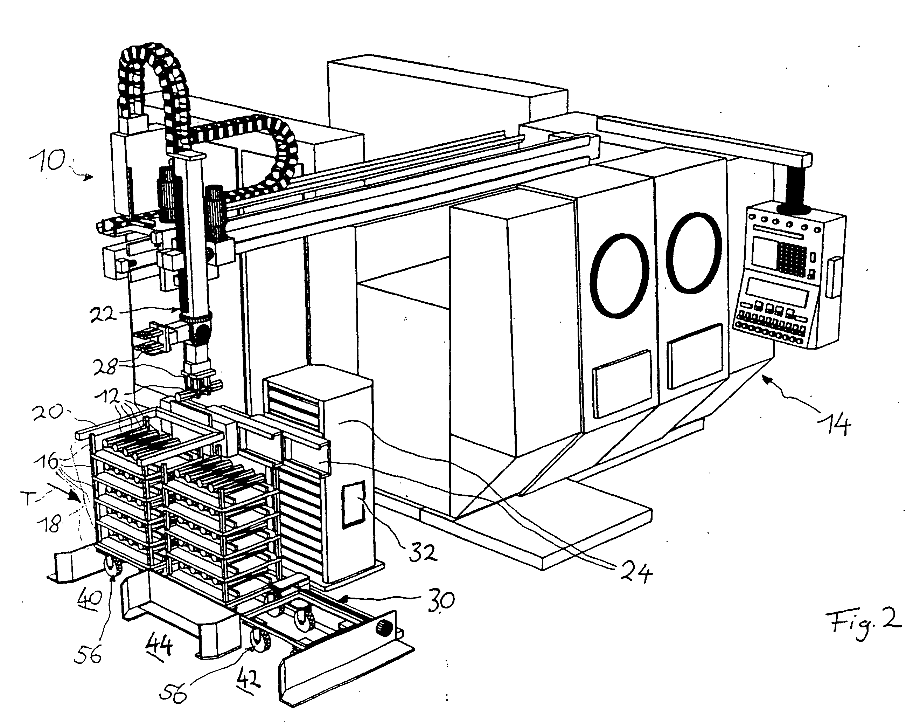

In Fig. 2 ist eine Bearbeitungseinrichtung 14 schematisch dargestellt, die gemäß der gewählten Darstellung in ihrem linken vorderen Bereich eine Handhabungsvorrichtung 10 besitzt. Die Bearbeitungseinrichtung 14 bearbeitet Werkstücke 12, die ihr von der Handhabungsvorrichtung 10 einzeln zugeführt werden.

Die Handhabungsvorrichtung 10 besitzt hierzu eine Werkstückhandhabungseinheit 22 mit einem Greifer 28, der das jeweils zu bearbeitende Werkstück 12 aufnimmt, der Bearbeitungseinrichtung 14 zuführt und nach Bearbeitung wieder ablegt. Dieser Greifer 28 ist als zweifach wirkender Greifer ausgebildet, derart, daß er das zu entnehmende Werkstück erfaßt und gleichzeitig das bearbeitete Werkstück ablegt.

Die Handhabungsvorrichtung 10 Besitzt weiterhin eine Werkstückträgerhandhabungseinheit 20, die mit Werkstücken 12 bestückte Werkstückträger 16, die innerhalb einer Werkstückträgerstapeleinheit 18 vorhanden sind, einer definierten Bearbeitungsposition zum Entnehmen und Wiederablegen des zu bearbeitetenden Werkstücks 12 durch die Werkstückhandhabungseinheit 22 zuführt.

Die Werkstückträgerhandhabungseinheit 20 ist an einer Trageinheit 24 entlang einer horizontalen Achse H und einer vertikalen Achse V verschiebbar gelagert. Die Bewegung der Werkstückträgerhandhabungseinheit 20 wird über eine in Fig. 2 schematisch dargestellte Steuereinheit 32 gesteuert.

Weiterhin besitzt die Handhabungsvorrichtung 10 eine Zuführposition 40 und eine Entnahmeposition 42, wobei in Zuführposition 40 eine Werkstückträgerstapeleinheit 18 von außen zugeführt wird und eine Werkstückträgerstapeleinheit 18 in Entnahmeposition 42 nach außen entnommen werden kann. Zwischen Zuführposition 40 und Entnahmeposition 42 ist eine Zwischenposition 44 vorhanden. Weiterhin ist eine Stapeltransporteinheit 30 vorhanden, die einen Transport der Werkstückträgerstapeleinheiten 18 von der Zuführposition 40 zur Entnahmeposition 42 über die Zwischenposition 44 ermöglicht.

Die Bewegungen der Stapeltransporteinheit 30 werden über die Steuereinheit 32 gesteuert und mittels nicht näher dargestellter Aggregate ausgeführt.

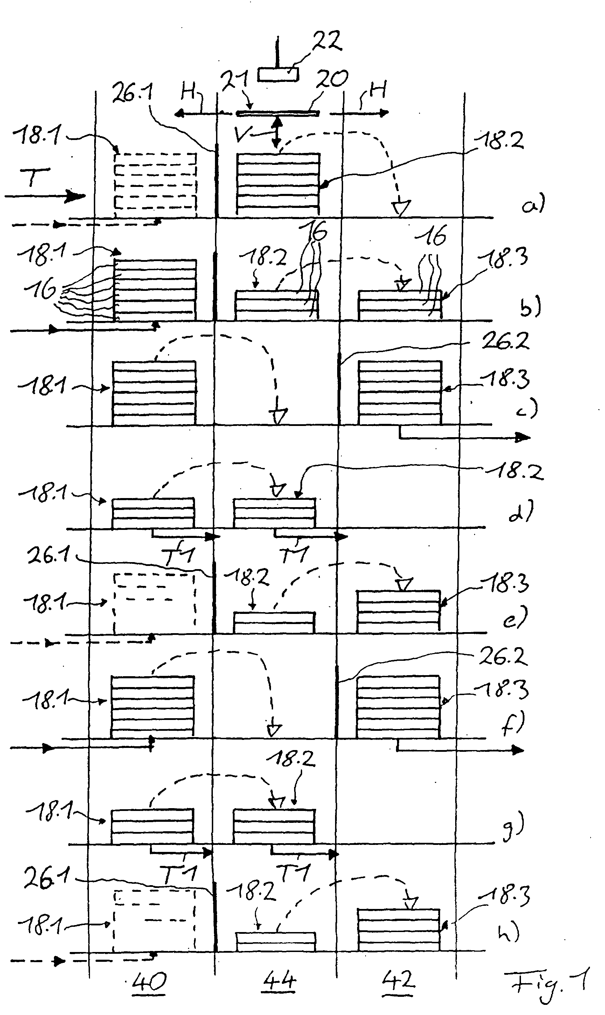

In Fig. 1 ist schematisch die Verarbeitung der jeweiligen Werkstückträgerstapeleinheiten 18.1, 18.2, 18.3 im Laufe des Verfahrens dargestellt. Die Zuführposition 40, die Zwischenposition 44 und die Entnahmeposition 42 sind ortsfest und liegen in einer Transportrichtung T, die parallel zur horizontalen Verschiebeachse H der Werkstückträgerhandhabungseinheit 20 verläuft. Die bogenförmig gestrichelt dargestellten Pfeile zeigen die Verbringung des jeweiligen Werkstückträgers 16 von der jeweiligen Aufnahmeposition zur Ablageposition an, wobei der jeweilige Werkstückträger 16 mit Werkstücken 12 beim Überführen von der Aufnahmeposition zur Ablageposition zunächst von der Werkstückträgerhandhabungseinheit 20 einer Bereitstellungsposition 21 zugeführt wird, in der die Werkstückhandhabungseinheit 22 sämtliche Werkstücke 12 eines Werkstückträgers 16 nacheinander entnimmt, der Bearbeitungsvorrichtung 14 zuführt und nach Bearbeitung wieder auf den Werkstückträger 16 in Bereitstellungsposition 21 ablegt. Erst danach wird der betreffende Werkstückträger 16 mittels der Werkstückträgerhandhabungseinheit 20 von der Bereitstellungsposition 21 in die jeweilige Ablageposition verbracht.

In Fig. 1 sind die Bezugszeichen der Werkstückträgerstapeleinheit 18 um eine Eiffer erweitert angegeben, wobei die Erweiterung .1 bedeutet, daß der Stapel oder Teile des Stapels sich in Zuführposition 40, die Erweiterung .2, daß sich der Stapel bzw. Teile des Stapels in Zwischenposition 44 und die Erweiterung .3 die Anordnung des Stapels bzw. der Werkstückträgerstapeleinheit oder Teile davon in der Entnahmeposition 42 befinden.

Fig. 1a) zeigt die Ausgangssituation. In der Zuführposition 40 und der Zwischenposition 44 steht jeweils eine Werkstückträgerstapeleinheit 18 bereit. Die Werkstückträgerhandhabungseinheit 20 beginnt mit der Aufnahme von Werkstückträgern 16 aus der Zwischenposition und nach Bearbeitung der einzelnen Werkstücke - wie oben geschildert - mit der Ablage in Ablageposition, welche Ablageposition gem. Fig. 1a) der Entnahmeposition 42 entspricht. Sobald die Werkstückträgerstapeleinheit 18 in der Zwischenposition abgearbeitet ist (Fig. 1c)), wird die Aufnahmeposition und Ablageposition der Werkstückträgerhandhabungseinheit 20 neu definiert, nämlich um eine Position entgegen der Transportrichtung T verschoben, d.h. die Zuführposition 40 wird zur Aufnahmeposition und die Zwischenposition 44 wird zur Ablageposition der Werkstückträgerhandhabungseinheit 20.

In diesem Bearbeitungszustand kann die vollständig bearbeitete Werkstückträgerstapeleinheit 18 aus der Position 42 entnommen werden.

Sobald die Entnahmeposition 42 frei ist (Fig. 1d)), werden die in Zuführposition 40 und in der Zwischenposition 44 befindlichen Werkstückträgerstapeleinheiten 18.1 bzw. 18.2 mittels der Stapeltransporteinheit 30 um eine Bereichseinheit in Transportrichtung T verschoben und gleichzeitig wird die Aufnahmeposition und Ablageposition der Werkstückträgerhandhabungseinheit 20 ebenfalls als um eine Position in Transportrichtung T verschoben über die Steuereinheit definiert. Danach erfolgt die weitere Abarbeitung der Werkstückträgerstapeleinheit 18.2 in der Zwischenposition 44 und die Ablage der einzelnen Werkstückträger 16 in der Entnahmeposition 42. Gleichzeitig kann in diesem Zustand in die Zuführposition 40 eine neue Werkstückträgerstapeleinheit 18.1 eingebracht werden.

Nachdem die Werkstückträgerstapeleinheit 18.2 in der Zwischenposition 44 vollständig abgearbeitet ist und in der Entnahmeposition 42 eine vollständig bearbeitete Werkstückträgerstapeleinheit 18.3 vorhanden ist (siehe Fig. 1f)), wird diese Werkstückträgerstapeleinheit 18.3 aus der Entnahmeposition 42 entfernt und gleichzeitig die Aufnahme- und Ablageposition für die Werkstückträgerhandhabungseinheit 20 als um eine Einheit entgegen der Transportrichtung T verschobene Position definiert. Dieser Verfahrensschritt entspricht dem bereits gem. Fig. 1c) beschriebenen Verfahrensschritt. Danach wiederholen sich die Verfahrensschritte gem.
Fig. 1g) und Fig. 1h) gem. Fig. 1d) und 1e). In der Folge kommt es im weiteren Verfahrensablauf zur Wiederholung der Verfahrensschritte gem. Fig. 1c), d), e).

Die jeweils neu zu definierende Aufnahmeposition bzw. Ablageposition für die Werkstückträgerhandhabungseinheit 20 erfolgt über die in Fig. 1 nicht näher dargestellte, bereits. oben erwähnte Steuereinheit 32, die ebenfalls den darauf abgestimmten Bewegungsablauf der Stapeltransporteinheit 30 steuert.

Weiterhin sind in Fig. 1 schematisch in der jeweiligen Situation einbringbare Schutzwände 26.1 bzw. 26.2 dargestellt, die gewährleisten, daß beim Einbringen bzw. Entnehmen von Werkstückträgerstapeleinheiten 18 kein Kontakt mit dem übrigen Bereich, in dem eine Bearbeitung momentan stattfindet, möglich ist. Diese Maßnahme dient der Arbeitssicherheit.

Die Verschiebung der Werkstückträgerstapeleinheiten 18 um eine Bereichseinheit in Transportrichtung T, sobald die Entnahmeposition 42 frei ist (Fig. 1d), g)), kann auch erfolgen, wenn ein Werkstückträger 16 aus seiner Aufnahmeposition entnommen ist und sich in Bereitschaftsposition, d.h. in der Zugriffsphase des Greifers 28 der Werkstückhandhabungseinheit 22 befindet.

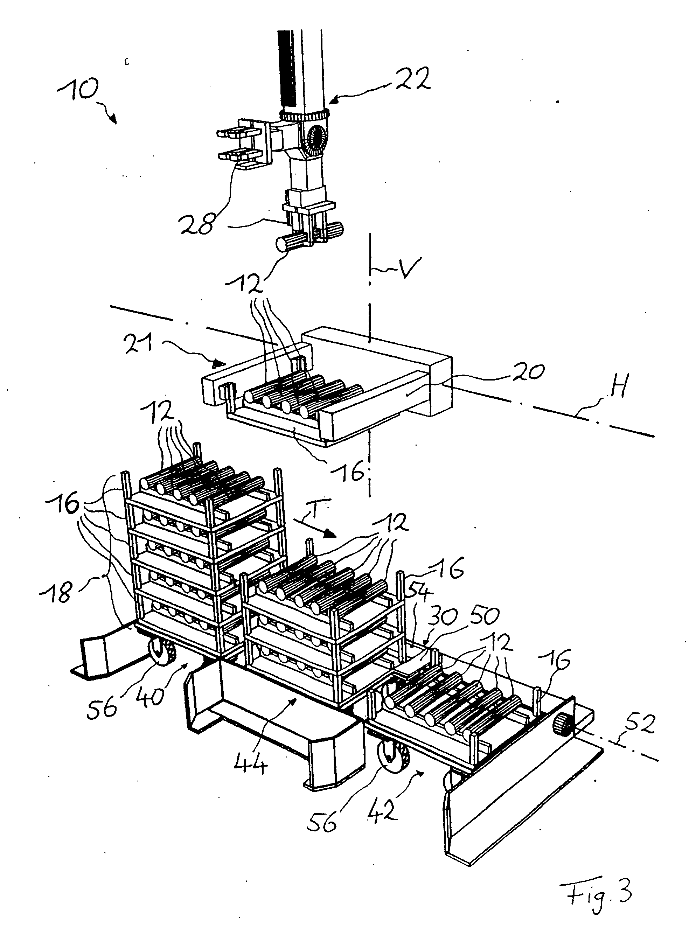

In Fig. 3 ist schematisch ein Zustand dargestellt, in dem die Zwischenposition 44 als Aufnahmeposition für die Werkstückträgerhandhabungseinheit 20 und die Entnahmeposition 42 als Ablageposition für die Werkstückträgerhandhabungseinheit 20 definiert ist. In Zuführposition 40 ist bereits eine volle Werkstückträgerstapeleinheit 18.1 mit vollständig bestückten Werkstückträgern 16 neu eingebracht.

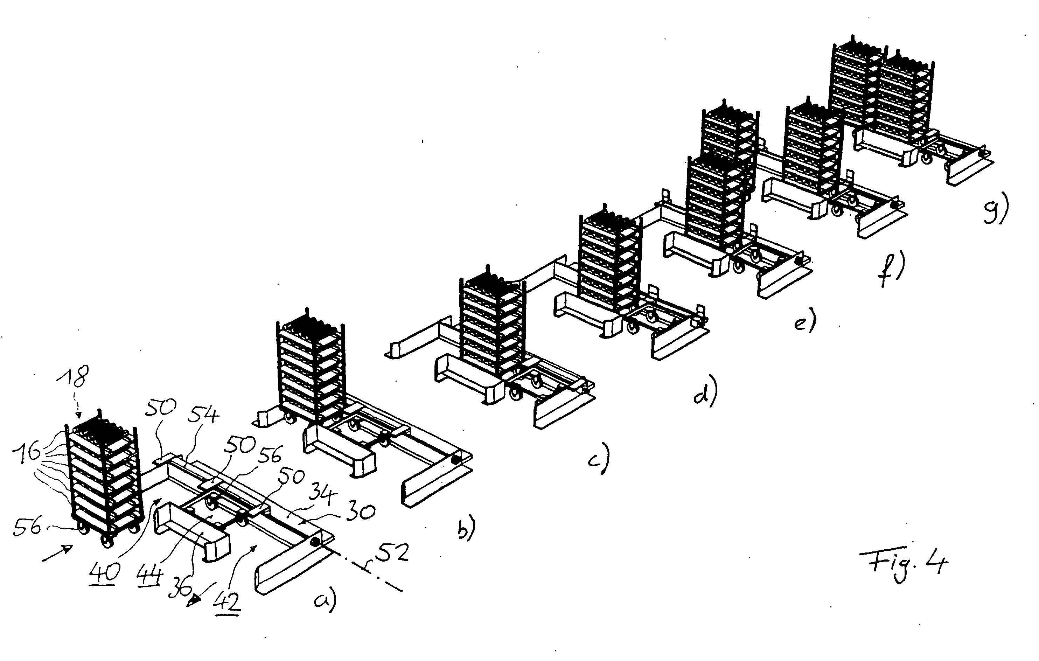

Eine konstruktive Ausführungsform einer Stapeltransporteinheit 30 ist in Fig. 4 schematisch anhand der Beschickung der Vorrichtung zum Start des Verfahrens dargestellt.

Die Stapeltransporteinheit 30 besitzt ein bodenseitig angeordnetes, im wesentlichen C-förmiges Rahmenprofil 34, dessen Steghöhe so gewählt ist, daß innenkonturmäßig drei Werkstückträgerstapeleinheiten 18 beabstandet angeordnet werden können.

Dem Steg des Rahmenprofils 34 gegenüberliegend ist ein weiteres Führungsprofil 36 bodenseitig vorhanden, das im wesentlichen eine Länge aufweist, die der Zwischenposition 44 entspricht, derart, daß oberseitig und unterseitig eine Öffnung vorhanden ist, durch die hindurch ein Werkstückträgerstapeleinheit 18 in die Zuführposition 40 eingebracht bzw. aus der Entnahmeposition 42 herausgebracht werden kann.

Der Steg des Rahmenprofils 34 und das Führungsprofil 36 bewirken eine Linearführung der innerhalb der Stapeltransporteinheit 30 verschieblich vorhandenen Werkstückträgerstapeleinheiten 18.

Parallel zum Steg des Rahmenprofils 34 ist ein Drehachsenprofil 52 vorhanden, an dem eine Profileinheit 54 mit Vorsprungeinheiten 50 in Richtung der Drehachse 52 längsverschieblich und um die Drehachse 52 drehbar gelagert ist. Die Profileinheit 54 besitzt hierbei eine Höhe in etwa von 2/3 der Steghöhe des Rahmenprofils 34, wobei die Vorsprungeinheiten 50 am Ende und in der Mitte der Profileinheit 54 angeordnet sind. Im Ausgängszustand gem. Fig. 4a) sind die Vorsprungeinheiten 50 nach vorne geklappt. Eine erste Werkstückträgerstapeleinheit 18 wird in die Zuführposition 40 verbracht (Fig. 4b)). Die Verschiebe- und Drehbewegung der Profileinheit 54 wird über nicht dargestellte Aggregate bewerkstelligt, die von einer nicht dargestellten Steuereinheit angesteuert werden. Gemäß Fig. 4c) wird nach dem Einbringen der ersten Werkstückträgerstapeleinheit 18 diese mittels der Stapeltransporteinheit 30 in die Zwischenposition verschoben. Danach wird die Profileinheit 54 gedreht, so daß die Vorsprungeinheit 50 außer Eingriff mit der ersten Werkstückträgerstapeleinheit 18 gelangen (Fig. 4d)). Danach wird die Profileinheit 54 wieder in ihre Ausgangsposition zurückgeschoben und die Vorsprungeinheiten 50 werden nach vorn geklappt. Nach dem Einbringen einer weiteren Werkstückträgerstapeleinheit 18 in die Zuführposition 40 ist die Vorrichtung startbereit.

In Zwischenposition 44 befindet sich zu Beginn ein leerer Rollwagen 56, der aufgrund der Verschiebung der ersten Werkstückträgerstapeleinheit 18 gem. Fig. 4c) in Entnahmeposition 42 verbracht wird.

Es ist auch denkbar, daß die Werkstückträgerstapeleinheit 18 lediglich einen Werkstückträger aufweist.

Weiterhin ist möglich, daß die Vorrichtung mehrere Zwischenpositionen aufweist, die zu Beginn des Handhabungsverfahrens mit Werkstückträgerstapeleinheiten bestückt werden können.

## Patentansprüche

1. Handhabungsvorrichtung (10) zur Zuführung und/oder Abführung von Werkstücken (12) als Rohteile zu einer Bearbeitungs- oder Montageeinrichtung (14) zu Bearbeitungs- und/oder Montagezwecken und zur Aufnahme von Werkstücken (12) nach Bearbeitung und/oder Montage als Fertigteile, mit
- Werkstückträgern (16), auf welchen die Werkstücke (12) angeordnet sind,
- Werkstückträgerstapeleinheiten (18), die übereinander angeordnete Werkstückträger (16) aufweisen,
- einer Werkstückhandhabungseinheit (22), die die Werkstücke (12) von dem jeweiligen Werkstückträger (16) entnimmt und der Bearbeitungs- und/oder Montageeinrichtung (14) zuführt und nach Bearbeitung/Montage auf dem Werkstückträger (16) wieder ablegt,
- einer Werkstückträgerhandhabungseinheit (20), die die jeweiligen Werkstückträger (16) mit unbearbeiteten Werkstücken (12) einer Werkstückträgerstapeleinheit (18) der Werkstückhandhabungseinheit (22) von einer Aufnahmeposition aus in eine Bereitstellungsposition zuführt und diesen Werkstückträger (16) nach Bearbeitung seiner Werkstücke (12) von der Bereitstellungsposition auf eine Ablageposition einer weiteren Werkstückträgerstapeleinheit ablegt,
- einer Stapeltransporteinheit (30), die die Werkstückträgerstapeleinheiten (18) innerhalb der Vorrichtung in Transportrichtung (T) transportiert, und zwar von einer Zufuhrposition (40), der die Werkstückträgerstapeleinheiten (18) mit den unbearbeiteten Werkstücken (12) von außen zugeführt werden, bis zu einer Entnahmeposition (42) von der die Werkstückträgerstapeleinheiten (18) mit den bearbeiteten Werkstücken (12) nach außen entnommen werden,
- einer Steuereinrichtung (32), die so ausgebildet ist, dass sie die Komponenten derart ansteuert, dass
-- die Werkstückträgerhandhabungseinheit (20) die Werkstückträger (16) mit zu bearbeitenden Werkstücken (12) in einer Aufnahmeposition entnimmt und in einer Ablageposition die Werkstückträger (16) nach Bearbeitung ihrer Werkstücke (12) ablegt, d.h. die Aufnahmeposition insbesondere benachbart zur Ablageposition ausgebildet ist,
- wobei zwischen Zufuhrposition (40) und Entnahmeposition (42) zumindest eine weitere Zwischenposition (44) für jeweils eine Werkstückträgerstapeleinheit (18) vorhanden ist,
- die Stapeltransporteinheit (30) so ausgebildet ist, dass sie zumindest zwei vor der Entnahmeposition (42) angeordnete Werkstückträgerstapeleinheiten um eine Position in Transportrichtung (T) zur Entnahmeposition (42) hin verschieben kann,
**dadurch gekennzeichnet, dass**
- die Steuereinrichtung (32) weiterhin so ausgebildet ist, dass
-- sobald in der Entnahmeposition (42) eine vollständig bearbeitete Werkstückträgerstapeleinheit (18) vorhanden ist, die Aufnahme- und Ablageposition der Werkstückträgerhandhabungseinheit (20) um eine Position entgegen der Transportrichtung (T) verschoben wird,
-- nach Entnahme der Werkstückträgerstapeleinheit (18) aus der Entnahmeposition (42) zumindest zwei der vor der Entnahmeposition (42) befindlichen Werkstückträgerstapeleinheiten (18) um eine Position in Transportrichtung (T) mittels der Stapeltransporteinheit (30) verschoben werden und gleichzeitig die Aufnahmeposition und Ablageposition der Werkstückträgerhandhabungseinheit (20) ebenfalls um eine Position in Transportrichtung (T) verschoben wird und dadurch in die Zuführposition (40) eine Werkstückträgerstapeleinheit (18) mit Werkstückträgern (16) mit unbearbeiteten Werkstücken (12) eingebracht werden kann.

2. Handhabungsvorrichtung (10) zur Zuführung und/oder Abführung von Werkstücken (12) als Rohteile zu einer Bearbeitungs- oder Montageeinrichtung (14) zu Bearbeitungs- und/oder Montagezwecken und zur Aufnahme von Werkstücken (12) nach Bearbeitung und/oder Montage als Fertigteile, mit
- Werkstückträgern (16), auf welchen die Werkstücke (12) angeordnet sind,
- Werkstückträgerstapeleinheiten (18), die übereinander angeordnete Werkstückträger (16) aufweisen,
- einer Werkstückhandhabungseinheit (22), die die Werkstücke (12) von dem jeweiligen Werkstückträger (16) entnimmt und der Bearbeitungs- und/oder Montageeinrichtung (14) zuführt und nach Bearbeitung/Montage auf dem Werkstückträger (16) wieder ablegt,
- einer Werkstückträgerhandhabungseinheit (20), die die jeweiligen Werkstückträger (16) mit unbearbeiteten Werkstücken (12) einer Werkstückträgerstapeleinheit (18) der Werkstückhandhabungseinheit (22) von einer Aufnahmeposition aus in eine Bereitstellungsposition zuführt und diesen Werkstückträger (16) nach Bearbeitung seiner Werkstücke (12) von der Bereitstellungsposition auf eine Ablageposition einer weiteren Werkstückträgerstapeleinheit ablegt und die die Werkstückträgerstapeleinheiten (18) innerhalb der Vorrichtung in Transportrichtung (T) transportiert, und zwar von einer Zufuhrposition (40), der die Werkstückträgerstapeleinheiten (18) mit den unbearbeiteten Werkstücken (12) von außen zugeführt werden, bis zu einer Entnahmeposition (42) von der die Werkstückträgerstäpeleinheiten (18) mit den bearbeiteten Werkstücken (12) nach außen entnommen werden,
- einer Steuereinrichtung (32), die so ausgebildet ist, dass sie die Komponenten derart ansteuert, dass
-- die Werkstückträgerhandhabungseinheit (20) die Werkstückträger (16) mit zu bearbeitenden Werkstücken (12) in einer Aufnahmeposition entnimmt und in einer Ablageposition die Werkstückträger (16) nach Bearbeitung ihrer Werkstücke (12) ablegt, d.h. die Aufnahmeposition insbesondere benachbart zur Ablageposition ausgebildet ist,
- wobei zwischen Zufuhrposition (40) und Entnahmeposition (42) zumindest eine weitere Zwischenposition (44) für jeweils eine Werkstückträgerstapeleinheit (18) vorhanden ist,
- die Werkstückträgerhandhabungseinheit (20) so ausgebildet ist, dass sie zumindest zwei vor der Entnahmeposition (42) angeordnete Werkstückträgerstapeleinheiten um eine Position in Transportrichtung (T) zur Entnahmeposition (42) hin verschieben kann,
**dadurch gekennzeichnet, dass**
- die Steuereinrichtung (32) weiterhin so ausgebildet ist, dass
-- sobald in der Entnahmeposition (42) eine vollständig bearbeitete Werkstückträgerstapeleinheit (18) vorhanden ist, die Aufnahme- und Ablageposition der Werkstückträgerhandhabungseinheit (20) um eine Position entgegen der Transportrichtung (T) verschoben wird,
-- nach Entnahme der Werkstückträgerstapeleinheit (18) aus der Entnahmeposition (42) zumindest zwei der vor der Entnahmeposition (42) befindlichen Werkstückträgerstapeleinheiten (18) um eine Position in Transportrichtung (T) mittels der Werkstückträgerhandhabungseinheit (20) verschoben werden und gleichzeitig die Aufnahmeposition und Ablageposition der Werkstückträgerhandhabungseinheit (20) ebenfalls um eine Position in Transportrichtung (T) verschoben wird und dadurch in die Zuführposition (40) eine Werkstückträgerstapeleinheit (18) mit Werkstückträgern (16) mit unbearbeiteten Werkstücken (12) eingebracht werden kann.

3. Handhabungsvorrichtung nach Anspruch 1 oder 2,
**dadurch gekennzeichnet, dass**
- zwischen der Zuführposition (40) und der Entnahmeposition (42) eine einzige Zwischenposition (44) vorhanden ist.

4. Handhabungsvorrichtung nach Anspruch 1 oder 3, wenn abhängig von Anspruch 1,
**dadurch gekennzeichnet, dass**
- die Werkstückträgerhandhabungseinheit (20) um eine horizontale und vertikale Achse (V) verschieblich vorhanden ist und die Transportrichtung der Stapeltransporteinheit (30) im wesentlichen parallel zur horizontalen Achse (H) der Werkstückträgerhandhabungseinheit (20) angeordnet ist.

5. Handhabungsvorrichtung nach einem der vorstehenden Ansprüche,
**dadurch gekennzeichnet, dass**
- bewegbare Schutzwände (26.1, 26.2) vorhanden sind, die bei Zuführung von Werkstückträgerstapeleinheiten bzw. bei Entnahme von Werkstückträgerstapeleinheiten den benachbarten Positionsbereich, in dem eine Bearbeitung stattfindet, versperren.

6. Handhabungsvorrichtung nach einem der vorstehenden Ansprüche 1, 3 bis 5, wenn abhängig von Anspruch 1,
**dadurch gekennzeichnet, dass**
- die Stapeltransporteinheit (30) innerhalb einer Linearführung angeordnet ist und zwischen die jeweiligen Werkstückträgerstapeleinheiten einschwenkbare Vorsprungeinheiten (50) besitzt.

7. Handhabungsvorrichtung nach einem der Ansprüche 1, 3 bis 5, wenn abhängig von Anspruch 1,
**dadurch gekennzeichnet, dass** die Stapeltransporteinheit (30) einen Kettenantrieb mit ansteuerbaren Aggregaten aufweist.

8. Handhabungsvorrichtung nach einem der Ansprüche 1, 3 bis 5, wenn abhängig von Anspruch 1,
**dadurch gekennzeichnet, dass** die Stapeltransporteinheit einen über Antriebsaggregate ansteuerbaren Schubstangenantrieb aufweist.

9. Handhabungsvorrichtung nach Anspruch 6,
**dadurch gekennzeichnet, dass**
- die Stapeltransporteinheit (30) eine Drehachseneinheit (52) besitzt, auf der die mittels eines Aggregats längsverschieblich und mittels eines Aggregats drehbar angeordneten Vorsprungeinheiten (50) vorhanden sind.

10. Handhabungsvorrichtung nach einem der vorstehenden Ansprüche,
**dadurch gekennzeichnet, dass**
- die Werkstückträgerstapeleinheiten (18) unterseitig als Rollwagen oder statisch umsetzbare Einheiten ausgebildet sind.

11. Verfahren zur Handhabung von Werkstücken (12), die auf Werkstückträgern (16) gelagert sind, welche Werkstückträger (16) zu Werkstückträgerstapeleinheiten (18) gestapelt sind, wobei die Werkstückträgerstapeleinheiten (18) von außen einer Zuführposition (40) zugeführt werden, mittels einer Stapeltransporteinheit (30) oder einer Werkstückträgerhandhabungseinheit (20) in Transportrichtung (T) einer Entnahmeposition (42) zugeführt werden, wobei die Werkstückträgerhandhabungseinheit (20) die einzelnen Werkstückträger (12) einer Bereitstellungsposition (21) zuführt, auf die die Werkstückhandhabungseinheit (20) zugreift mit folgenden Verfahrensschritten:
a) Zuführen einer Werkstückträgerstapeleinheit (18) zu der Zuführposition (40) von außen,
b) Transport der Werkstückträgerstapeleinheit (18) in Transportrichtung (T) in eine Zwischenposition (44),
c) gegebenenfalls Wiederholen der Schritte a) bis c) entsprechend der Anzahl der Zwischenpositionen,
d) Entnahme eines Werkstückträgers (16) durch die Werkstückträgerhandhabungseinheit (20) aus einer momentan als Aufnahmeposition definierten Zwischenposition zum Zuführen an eine Bearbeitungsposition,
e) Entnehmen der Werkstücke und Zuführen einer Bearbeitungs-/Montageeinrichtung durch die Werkstückhandhabungseinheit (22) und Ablage des Werkstücks (12) auf dem Werkstückträger (16) nach Bearbeitung so lange, bis die Werkstücke (12) des jeweiligen Werk stückträgers (16) vollständig bearbeitet sind,
f) Entnahme des Werkstückträgers (16) aus der Bearbeitungsposition durch die Werkstückträgerhandhabungseinheit (20) und Ablage in der momentan als Ablageposition definierten Entnahmeposition (42),
g) Wiederholen der Schritte d) bis f) bis die Werkstückträgerstapeleinheit (18) in momentaner Aufnahmeposition vollständig abgearbeitet ist,
k) Zuführung einer weiteren Werkstückträgerstapeleinheit (18) in Zuführposition (42) von außen,
l) Wiederholen der Verfahrensschritte d) bis j),
**dadurch gekennzeichnet, dass** zwischen den Verfahrensschritten g) und k) folgende Verfahrensschritte hinzukommen:
h) Verschieben der momentanen Aufnahme- und Ablageposition entgegen Transportrichtung (T) um zumindest eine Position und Entnahme der bearbeiteten Werkstückträgerstapeleinheit (18) aus der Entnahmeposition (42),
j) Verschieben der vor der Entnahmeposition (42) angeordneten Werkstückträgerstapeleinheiten (18) um eine Position in Transportrichtung (T) bei gleichzeitigen Verschieben der Aufnahme-/Ablageposition der Werk stückträgerhandhabungseinheit (20) um eine Position in Transportrichtung (T).

12. Verfahren nach Anspruch 11,
**dadurch gekennzeichnet, dass**
- die Aufnahmeposition und die Ablageposition der Werkstückträgerhandhabungseinheit als benachbarte Positionen definiert sind.

13. Verfahren nach Anspruch 11 und/oder 12,
**dadurch gekennzeichnet, dass**
- die vor der Entnahmeposition (52) befindlichen Werkstückträgerstapeleinheiten (18) durch die Stapeltransporteinheit (30) oder Werkstückträgerhandhabungseinheit (20) in einer Transportrichtung (T) verschoben werden, die parallel zu der horizontalen Achse (H) der Werkstückträgerhandhabungseinheit (20) verläuft.

14. Verfahren nach Anspruch 11,
**dadurch gekennzeichnet, dass**
- die Werkstückhandhabungseinheit einen Satz von Werkstücken einer Werkstückträgereinheit einzeln oder gemeinsam der Bearbeitungseinrichtung zuführt,
- die dann geleerte Werkstückträgereinheit einer Lagerzwischenposition zugeführt wird,
- nach Abarbeitung sämtlicher zu bearbeitender Werkstückträger-/stapeleinheiten die in der Bearbeitungsvorrichtung noch vorhandenen Werkstücke der leeren Werkstückträgereinheit zugeführt werden.

## Claims

1. Handling device (10) for feeding and/or removing workpieces (12) as unfinished parts to and/or from machining or assembly equipment (14) for machining and/or assembly purposes and for picking up workpieces (12) as finished parts after machining and/or assembly, having
- workpiece carriers (16), on which the workpieces (12) are arranged,
- workpiece-carrier stack units (18), which have workpiece carriers (16) arranged one above another,
- a workpiece handling unit (22), which removes the workpieces (12) from the respective workpiece carrier (16) and feeds them to machining and/or assembly equipment (14) and, after machining/assembly, sets them down again on the workpiece carrier (16),
- a workpiece-carrier handling unit (20), which feeds the respective workpiece carriers (16) having unmachined workpieces (12) and belonging to a workpiece-carrier stack unit (18) to the workpiece handling unit (22), from a pick-up position into a standby position and, after its workpieces (12) have been machined, sets this workpiece carrier (16) down from the standby position into a set-down position of a further workpiece-carrier stack unit,
- a stack transport unit (30), which transports the workpiece-carrier stack units (18) within the device in the transport direction (T), specifically from a feed position (40) to which the workpiece-carrier stack units (18) having the unmachined workpieces (12) are fed from outside, as far as a removal position (42), from which the workpiece-carrier stack units (18) having the machined workpieces (12) are removed to the outside,
- a control device (32) being constructed such that it activates the components in such a way that,
-- the workpiece-carrier handling unit (20) removes the workpiece carriers (16) having workpieces (12) to be machined ina pick-up position and, after their workpieces (12) have been machined, sets the workpiece carriers (16) down in a set-down position, i.e. the pick-up position is in particular designed to be adjacent to the set-down position,
- whereby between the feed position (40) and removal position (42) is at least one further intermediate position (44) for one workpiece-carrier stack unit (18) in each case,
- the stack transport unit (30) is constructed such that it can displace at least two workpiece-carrier stack units arranged upstream of the removal position (42) by one position in the transport direction (T) to the removal position (42),
**characterized in that**
- the control device (32) being furthermore constructed in such way that
-- as soon as there is a completely machined workpiece-carrier stack unit (18) in the removal position (42), the pick-up and set-down positions of the workpiece-carrier handling unit (20) are displaced by one position in the direction opposite to the transport direction (T),
-- after the worpiece-carrier stack unit (18) has been removed from the removal position (42), at least two of the workpiece-carrier stack units (18) located upstream of the removal position (42) are displaced by one position in the transport direction (T) by mean of the stack transport unit (30) and, at the same time, the pick-up position and set-down position of the workpiece-carrier handling unit (20) is also displaced by one position in the transport direction (T) and, as a result, a workpiece-carrier stack unit (18) having workpiece carriers (16) with unmachined workpieces (12) can be introduced into the feed position (40).

2. Handling device (10) for feeding and/or removing workpieces (12) as unfinished parts to and/or from machining or assembly equipment (14) for machining and/or assembly purposes and for picking up workpieces (12) as finished parts after machining and/or assembly, having
- workpiece carriers (16), on which the workpieces (12) are arranged,
- workpiece-carrier stack units (18), which have workpiece carriers (16) arranged one above another,
- a workpiece handling unit (22), which removes the workpieces (12) from the respective workpiece carrier (16) and feeds them to machining and/or assembly equipment (14) and, after machining/assembly, sets them down again on the workpiece carrier (16),
- a workpiece-carrier handling unit (20), which feeds the respective workpiece carriers (16) having unmachined workpieces (12) and belonging to a workpiece-carrier stack unit (18) to the workpiece handling unit (22), from a pick-up position into a standby position and, after its workpieces (12) have been machined, sets this workpiece carrier (16) down from the standby position into a set-down position of a further workpiece-carrier stack unit and which transports the workpiece-carrier stack units (18) within the device in the transport direction (T), specifically from a feed position (40) to which the workpiece-carrier stack units (18) having the unmachined workpieces (12) are fed from outside, as far as a removal position (42), from which the workpiece-carrier stack units (18) having the machined workpieces (12) are removed to the outside,
- a control device (32) being constructed such that it activates the components in such a way that,
-- the workpiece-carrier handling unit (20) removes the workpiece carriers (16) having workpieces (12) to be machined ina pick-up position and, after their workpieces (12) have been machined, sets the workpiece carriers (16) down in a set-down position, i.e. the pick-up position is in particular designed to be adjacent to the set-down position,
- whereby between the feed position (40) and removal position (42) is at least one further intermediate position (44) for one workpiece-carrier stack unit (18) in each case,
- the workpiece-carrier handling unit (20) is constructed such that it can displace at least two workpiece-carrier stack units arranged upstream of the removal position (42) by one position in the transport direction (T) to the removal position (42),
**characterized in that**
- the control device (32) being furthermore constructed in such way that
-- as soon as there is a completely machined workpiece-carrier stack unit (18) in the removal position (42), the pick-up and set-down positions of the workpiece-carrier handling unit (20) are displaced by one position in the direction opposite to the transport direction (T),
-- after the worpiece-carrier stack unit (18) has been removed from the removal position (42), at least two of the workpiece-carrier stack units (18) located upstream of the removal position (42) are displaced by one position in the transport direction (T) by mean of the workpiece-carrier handling unit (20) and, at the same time, the pick-up position and set-down position of the workpiece-carrier handling unit (20) is also displaced by one position in the transport direction (T) and, as a result, a workpiece-carrier stack unit (18) having workpiece carriers (16) with unmachined workpieces (12) can be introduced into the feed position (40).

3. Handling device according to Claim 1 or 2,
**characterized in that**
- between the feed position (40) and the removal position (42) there is a single intermediate position (44).

4. Handling device according to Claim 1 or 3 if dependent of Claim 1,
**characterized in that**
- the workpiece-carrier handling unit (20) can be displaced about a horizontal and vertical axis (V), and the transport direction of the stack transport unit (30) is arranged essentially parallel to the horizontal axis (H) of the workpiece-carrier handling unit (20).

5. Handling device according to one of the preceding Claims,
**characterized in that**
- there are mobile protective walls (26.1, 26.2) which, when workpiece-carrier stack units are being fed or when workpiece-carrier stack units are being removed, block off the area of the adjacent position, in which machining takes place.

6. Handling device according to one of the preceding Claims 1, 3 if dependent of Claim 1,
**characterized in that**
- the stack transport unit (30) is arranged within a linear guide and, between the respective workpiece-carrier stack units, has projecting units (50) that can be pivoted in.

7. Handling device according to one or more of Claims 1, 3 to 5 if dependent of Claim 1,
**characterized in that**
- the stack transport unit has a chain drive with assemblies which can be activated.

8. Handling device according to one or more of Claims 1, 3 to 5 if dependent of Claim 1,
**characterized in that**
- the stack transport unit has a push-rod drive which can be activated via drive assemblies.

9. Handling device according to Claim 6,
**characterized in that**
- the stack transport unit (30) has a rotary shaft unit (52), on which there are projecting units (50) which are arranged so that they can be displaced longitudinally by means of an assembly and rotated by means of an assembly.

10. Handling device according to one of the preceding Claims,
**characterized in that**
- on the underside, the workpiece-carrier stack units (18) are constructed as roller carriages or units that can be moved statically.

11. Method of handling workpieces (12) which are mounted on workpiece carriers (16), the said workpiece carriers (16) being stacked to form workpiece-carrier stack units (18), the workpiece-carrier stack units (18) being fed to a feed position (40) from outside, fed in the transport direction (T) by means of a stack transport unit (30) or a workpiece-carrier handling unit (20) to a removal position (42), the workpiece-carrier handling unit (20) feeding the individual workpiece carriers (12) to a standby position (21), to which the workpiece handling unit (20) makes access, having the following method steps:
a) feeding a workpiece-carrier stack unit (18) to the feed position (40) from outside,
b) transporting the workpiece-carrier stack unit (18) in the transport direction (T) into an intermediate position (44),
c) if appropriate, repeating steps a) to c) in accordance with the number of intermediate positions,
d) removing a workpiece carrier (16) by means of the workpiece-carrier handling unit (20) from an intermediate position currently defined as a pick-up position to feed it to a machining position,
e) removing the workpieces and feeding machining/assembly equipment by means of the workpiece handling unit (22) and setting the workpiece (12) down on the workpiece carrier (16) after machining, until the workpieces (12) of the respective workpiece carrier (16) have been machined completely,
f) removing the workpiece carrier (16) from the machining position by means of the workpiece-carrier handling unit (20) and setting it down in the removal position (42) currently defined as the set-down position,
g) repeating steps d) to f) until the workpiece-carrier stack unit (18) in the current pick-up position has been processed completely,
k) feeding a further workpiece-carrier stack unit (18) into the feed position (42) from outside,
l) repeating method steps d) to j),
**characterized in that** between the method steps g) and k) the following method steps are added:
h) displacing the current pick-up and set-down positions in the direction opposite to the transport direction (T) by at least one position and removing the machined workpiece-carrier stack unit (18) from the removal position (42),
j) displacing the workpiece-carrier stack units (18) arranged upstream of the removal position (42) by one position in the transport direction (T) and simultaneously displacing the pick-up/set-down positions of the workpiece-carrier handling unit (20) by one position in the transport direction (T).

12. Method according to Claim 11, **characterized in that**
- the pick-up position and the set-down position of the workpiece-carrier handling unit are defined as adjacent positions.

13. Method according to Claim 11 and/or 12, **characterized in that**
- the workpiece-carrier stack units (18) located upstream of the removal position (52) are displaced by the stack unit (30) or workpiece-carrier handling unit (20) in a transport direction (T) which runs parallel to the horizontal axis (H) of the workpiece-carrier handling unit (20).

14. Method according to Claim 11, **characterized in that**
- the workpiece handling unit feeds a set of workpieces from a workpiece carrier unit individually or jointly to the machining equipment,
- the workpiece carrier unit which is then emptied is fed to an intermediate storage position,
- after the processing of all the workpiece-carrier/stack units to be machined, the workpieces still in the machining equipment are fed to the empty workpiece carrier unit.

## Revendications

1. Dispositif de manutention (10) pour acheminer et/ou évacuer des pièces (12) sous la forme de pièces brutes vers un dispositif d'usinage ou de montage (14) à des fins d'usinage et/ou de montage et pour loger des pièces (12) après l'usinage et/ou le montage sous la forme de pièces finies, équipé des éléments suivants :
- des porte-pièces (16) sur lesquels les pièces (12) sont disposées,
- des unités d'empilement de porte-pièces (18), qui présentent des porte-pièces (16) disposés les uns au-dessus des autres,
- une unité de manutention de pièces (22), qui enlève les pièces (12) du porte-pièces (16) concerné et les amène à l'appareil d'usinage et/ou de montage (14) et les redépose après l'usinage/montage sur le porte-pièces (16),
- une unité de manutention de pièces (20), qui amène les porte-pièces (16) respectifs avec des pièces (12) non usinées d'une unité d'empilement de porte-pièces (18) de l'unité de manutention de pièces (22) d'une position de réception à une position d'approvisionnement et transfère ce porte-pièces (16) après l'usinage de ses pièces (12) de la position d'approvisionnement à une position de dépôt d'une autre unité d'empilement de porte-pièces,
- une unité de transport de piles (30) qui transporte les unités d'empilement de porte-pièces (18) à l'intérieur du dispositif dans le sens de transport (T), et ce d'une position d'alimentation (40), à laquelle les unités d'empilement de porte-pièces (18) sont amenées avec les pièces (12) non usinées de l'extérieur, jusqu'à une position de prélèvement (42), de laquelle les unités d'empilement de porte-pièces (18) sont prélevées avec les pièces (12) usinées vers l'extérieur.
- un dispositif de commande (32) qui est conçu de manière à commander les composants de telle sorte que
- l'unité de manutention de porte-pièces (20) prélève les porte-pièces (16) avec des pièces (12) à usiner dans une position de réception et dépose dans une position de dépôt les porte-pièces (16) après l'usinage de ses pièces (12), ce qui veut dire que la position de réception est conçue en particulier à côté de la position de dépôt,
- moyennant quoi au moins une autre position intermédiaire (44) existe entre une position d'alimentation (40) et une position de prélèvement (42) pour respectivement une unité d'empilement de porte-pièces (18),
- l'unité de transport de piles (30) est conçue de façon qu'elle puisse déplacer au moins deux unités d'empilement de porte-pièces disposées en amont de la position de prélèvement (42) d'une position dans le sens de transport (T) en direction de la position de prélèvement (42),
**caractérisée en ce que**
- le dispositif de commande (32) est conçu également de telle façon que
- dès qu'une unité d'empilement de porte-pièces (18) complètement usinée est présente dans la position de prélèvement (42), la position de prélèvement et de dépôt de l'unité de manutention de porte-pièces (20) est déplacée d'une position dans le sens contraire au sens de transport (T),
- après le prélèvement de l'unité d'empilement de porte-pièces (18) de la position de prélèvement (42), au moins deux unités d'empilement de porte-pièces (18) se trouvant en amont de la position de prélèvement (42) sont déplacées d'une position dans le sens de transport (T) au moyen de l'unité de transport de piles (30) et dans le même temps la position de réception et la position de dépôt de l'unité de manutention de porte-pièces (20) sont déplacées également d'une position dans le sens de transport (T) et de ce fait une unité d'empilement de porte-pièces (18) avec des porte-pièces (16) avec des pièces (12) non usinées peut être introduite dans la position d'alimentation (40).

2. Dispositif de manutention (10) pour acheminer et/ou évacuer des pièces (12) sous la forme de pièces brutes vers un dispositif d'usinage ou de montage (14) à des fins d'usinage et/ou de montage et pour loger des pièces (12) après l'usinage et/ou le montage sous la forme de pièces finies, équipé des éléments suivants :
- des porte-pièces (16) sur lesquels les pièces (12) sont disposées,
- des unités d'empilement de porte-pièces (18), qui présentent des porte-pièces (16) disposés les uns au-dessus des autres,
- une unité de manutention de pièces (22), qui enlève les pièces (12) du porte-pièces (16) concerné et les amène à l'appareil d'usinage et/ou de montage (14) et les redépose après l'usinage/montage sur le porte-pièces (16),
- une unité de manutention de pièces (20), qui amène les porte-pièces (16) respectifs avec des pièces (12) non usinées d'une unité d'empilement de porte-pièces (18) de l'unité de manutention de pièces (22) d'une position de réception à une position d'approvisionnement et transfère ce porte-pièces (16) après l'usinage de ses pièces (12) de la position d'approvisionnement à une position de dépôt d'une autre unité d'empilement de porte-pièces, et qui transporte les unités d'empilement de porte-pièces (18) à l'intérieur du dispositif dans le sens de transport (T), et ce d'une position d'alimentation (40), à laquelle les unités d'empilement de porte-pièces (18) sont amenées avec les pièces (12) non usinées de l'extérieur, jusqu'à une position de prélèvement (42), de laquelle les unités d'empilement de porte-pièces (18) sont prélevées avec les pièces (12) usinées vers l'extérieur.
- un dispositif de commande (32) qui est conçu de manière à commander les composants de telle sorte que
- l'unité de manutention de porte-pièces (20) prélève les porte-pièces (16) avec des pièces (12) à usiner dans une position de réception et dépose dans une position de dépôt les porte-pièces (16) après l'usinage de ses pièces (12), ce qui veut dire que la position de réception est conçue en particulier à côté de la position de dépôt,
- moyennant quoi au moins une autre position intermédiaire (44) existe entre une position d'alimentation (40) et une position de prélèvement (42) pour respectivement une unité d'empilement de porte-pièces (18),
- l'unité de manutention de porte-pièces (20) est conçue de façon qu'elle puisse déplacer au moins deux unités d'empilement de porte-pièces disposées en amont de la position de prélèvement (42) d'une position dans le sens de transport (T) en direction de la position de prélèvement (42)
**caractérisé en ce que**
- le dispositif de commande (32) est conçu également de telle façon que
- dès qu'une unité d'empilement de porte-pièces (18) complètement usinée est présente dans la position de prélèvement (42), la position de prélèvement et de dépôt de l'unité de manutention de porte-pièces (20) est déplacée d'une position dans le sens contraire au sens de transport (T),
- après le prélèvement de l'unité d'empilement de porte-pièces (18) de la position de prélèvement (42) au moins deux unités d'empilement de porte-pièces (18) se trouvant en amont de la position de prélèvement (42) sont déplacées d'une position dans le sens de transport (T) au moyen de l'unité de manutention des porte-pièces (20) et dans le même temps la position de réception et la position de dépôt de l'unité de manutention de porte-pièces (20) sont déplacées également d'une position dans le sens de transport (T) et de ce fait une unité d'empilement de porte-pièces (18) avec des porte-pièces (16) avec des pièces (12) non usinées peut être introduite dans la position d'alimentation (40).

3. Dispositif de manutention selon la revendication 1 ou 2, **caractérisé en ce qu'**il existe une position intermédiaire (44) unique entre la position d'alimentation (40) et la position de prélèvement (42).

4. Dispositif de manutention selon la revendication 1 ou 3, si dépendant de la revendication 1, **caractérisé en ce que**
- l'unité de manutention de porte-pièces (20) est présente de façon à pouvoir être déplacée autour d'un axe horizontal et d'un axe vertical (V) et le sens de transport de l'unité de transport de piles (30) est sensiblement parallèle à l'axe horizontal (H) de l'unité de manutention de porte-pièces (20).

5. Dispositif de manutention selon l'une quelconque des revendications précédentes,
**caractérisé en ce que**
- des cloisons de protection (26.1, 26.2) mobiles sont présentes, qui bloquent la zone de position voisine, dans laquelle est effectué un usinage, lors de l'arrivée ou du prélèvement des unités d'empilement de porte-pièces.

6. Dispositif de manutention selon l'une quelconque des revendications précédentes 1, 3 jusqu'à 5, si dépendant de la revendication 1, **caractérisé en ce que**
- l'unité de transport de piles (30) est disposée à l'intérieur d'un guide linéaire et présente des unités saillantes (50) pouvant rentrer entre les unités respectives d'empilement de porte-pièces.

7. Dispositif de manutention selon l'une quelconque des revendications 1, 3 jusqu'à 5, si dépendant de la revendication 1, **caractérisé en ce que** l'unité de transport de piles (30) présente une commande par chaîne avec des ensembles activables.

8. Dispositif de manutention selon l'une quelconque des revendications 1, 3 jusqu'à 5, si dépendant de la revendication 1, **caractérisé en ce que** l'unité de transport de piles présente une commande par bielle de poussée activable par des ensembles d'entraînement.

9. Dispositif de manutention selon la revendication 6,
**caractérisé en ce que** l'unité de transport de piles (30) présente une unité d'axe de rotation (52) sur laquelle sont présentes des unités saillantes (50) disposées de façon à pouvoir coulisser dans le sens longitudinal au moyen d'un ensemble et à pouvoir tourner au moyen d'un ensemble.

10. Dispositif de manutention selon l'une quelconque des revendications précédentes,
**caractérisé en ce que**
- les unités d'empilement de porte-pièces (18) sont conçues sur le dessous comme des chariots roulants ou des unités déplaçables au plan statique.

11. Procédé pour la manutention de pièces (12), qui sont logées sur des porte-pièces (16), lesquels porte-pièces (16) sont empilés sur des unités d'empilement de porte-pièces (18), les unités d'empilement de porte-pièces (18) étant amenées par l'extérieur à une position d'alimentation (40), étant amenées à une position de prélèvement (42) au moyen d'une unité de transport de piles (30) ou d'une unité de manutention de porte-pièces (20) dans le sens de transport (T), l'unité de manutention de porte-pièces (20) amenant les porte-pièces (12) individuels à une position d'alimentation (21), à laquelle l'unité de manutention de pièces (20) accède avec les étapes de procédé suivantes :
a) amenée d'une unité d'empilement de porte-pièces (18) à la position d'amenée (14) par l'extérieur,
b) transport de l'unité d'empilement de porte-pièces (18) dans le sens de transport (T) dans une position intermédiaire (44),
c) éventuellement répétition des étapes a) jusqu'à c) en fonction du nombre des positions intermédiaires,
d) prélèvement d'un porte-pièces (16) par l'unité de manutention de porte-pièces (20) à partir d'une position intermédiaire définie momentanément comme position de prélèvement pour l'amenée à une position d'usinage,
e) prélèvement des pièces et amenée d'un système d'usinage/montage par l'unité de manutention de pièces (22) et dépôt de la pièce (12) sur le porte-pièces (16) après usinage jusqu'à ce que les pièces (12) du porte-pièces (16) respectif soient complètement usinées,
f) prélèvement du porte-pièces (16) de la position d'usinage par l'unité de manutention de porte-pièces (20) et dépôt dans la position de prélèvement (42) définie momentanément comme position de dépôt,
g) répétition des étapes d) à f) jusqu'à ce que l'unité d'empilement de porte-pièces (18) soit complètement usinée dans la position de réception momentanée,
k) amenée d'une autre unité d'empilement de porte-pièces (18) dans la position d'amenée (42) par l'extérieur,
l) répétition des étapes de procédé d) à j),
**caractérisée en ce que** les étapes de procédé suivantes s'ajoutent entre les étapes de procédé g) et k) :
h) déplacement des positions momentanées de réception et de dépôt dans le sens contraire au sens de transport (T) d'au moins une position et prélèvement de l'unité usinée d'empilement de porte-pièces (18) de la position de prélèvement (42),
j) déplacement des unités d'empilement de porte-pièces (18) disposées en amont de la position de prélèvement (42) d'une position dans le sens de transport (T) avec déplacement simultané de la position de réception/dépôt de l'unité de manutention de porte-pièces (20) d'une position dans le sens de transport (T).

12. Procédé selon la revendication 11, **caractérisé en ce que** la position de réception et la position de dépôt de l'unité de manutention de porte-pièces sont définies comme des positions voisines.

13. Procédé selon les revendications 11 et/ou 12,
**caractérisé en ce que**
- les unités d'empilement de porte-pièces (18) se trouvant en amont de la position de prélèvement (52) sont déplacées par l'unité de transport de piles (30) ou l'unité de manutention de porte-pièces (20) dans un sens de transport (T) qui est parallèle à l'axe (H) horizontal de l'unité de manutention de porte-pièces (20).

14. Procédé selon la revendication 11,
**caractérisé en ce que**
- l'unité de manutention de pièces amène un lot de pièces à une unité porte-pièces individuellement ou conjointement à l'appareil d'usinage,
- l'unité porte-pièces alors vidée est amenée à une position intermédiaire de stockage,
- après l'usinage final de toutes les unités porte-pièces/unités d'empilement de porte-pièces à usiner, les pièces encore présentes dans le dispositif d'usinage sont amenées à l'unité porte-pièces vide.
